(19) Europäisches Patentamt

European Patent Office

Office européen des brevets

(11) **EP 1 246 130 A1**

(12) **EUROPEAN PATENT APPLICATION**

(43) Date of publication:
**02.10.2002 Bulletin 2002/40**

(51) Int Cl.⁷: **G06T 9/00**, H04N 7/26

(21) Application number: **01610038.0**

(22) Date of filing: **30.03.2001**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(71) Applicant: **TELEFONAKTIEBOLAGET LM<br>ERICSSON (publ)**<br>**126 25 Stockholm (SE)** | (72) Inventor: **Mekuria, Fisseha**<br>**224 72 Lund (SE)**<br><br>(74) Representative: **Boesen, Johnny Peder et al**<br>**Hofman-Bang Zacco A/S**<br>**Hans Bekkevolds Allé 7**<br>**2900 Hellerup (DK)** |

(54) **Method and apparatus for support and/or conversion of two still image coding formats**

(57) This invention relates to a method of supporting a first and a second image format, the method comprising the steps of obtaining image data in the first image format or in the second image format from a compressed image, and deriving relevant information on the basis of the obtained image data, where the method further comprises the step of applying a base function to at least part of the obtained image using at least part of the derived relevant information, where the base function is a function common to both the first and the second image format.

In this way a single transform may support two different compressed image formats having certain similarities like the JPEG and JPEG2000 without having to implement separate individual support for each format.

Additionally, low complexity image decoding, low power consumption, less memory usage, less processor instructions (MIPS) are obtained.

Additionally, backward compatibility to earlier JPEG standard is obtained in a very simple way while maintaining compatibility with the newer JPEG2000 standard.

This invention also relates to a corresponding computer system, apparatus and computer readable medium.

Figure 2

EP 1 246 130 A1

**Description**

The present invention relates to a method of supporting a first and a second image format, the method comprising the steps of

- obtaining image data in the first image format or in the second image format from a compressed image, and
- deriving relevant information on the basis of the obtained image data.

The present invention also relates to a method of converting between a first and a second image format, the method comprising the steps of

- obtaining image data in the first image format from a compressed image, and
- deriving relevant information on the basis of the obtained image data.

The present invention also relates to an apparatus for supporting a first and a second image format, the apparatus comprising

- receiving means for receiving image data in the first image format or in the second image format from a compressed image, and
- processing means for deriving relevant information on the basis of the obtained image data.

Additionally, the invention relates to a computer system for performing the method according to the invention and a computer readable-medium comprising a program, which may cause one or more computers to perform the method of the present invention.

Various image file formats exist for compressed image data, which reduces the size of the file normally at the expense of little or no noticeable loss of image quality.

Picture coding and transmission will be a main application area for the coming 3G systems. The current standard for picture coding is the so-called JPEG (Joint Picture Experts Group) and is widely used as a compression and decoding scheme for storage and transmission of picture signal. JPEG is based on the discrete cosine transform (DCT) algorithm for compression of image signals, see e.g. Multirate Systems & Filter-banks, P.P. Vaidyanathan, Prentice Hall, 1993, incorporated herein by reference.

Additionally, a new image compression algorithm is being standardised, which has some advantages in comparison to the JPEG standard such as error resilience, which is more applicable for, e.g. mobile, transmission. This so-called JPEG2000 algorithm, see e.g. Complexity of JPEG Still Image CODEC for Mobile Applications, F. Mekuria TWE/U 98:065, incorporated herein by reference, is based on a discrete wavelet transform (DWT), see e.g. JPEG2000 Image Coding Systems, ISO Final committee draft Version 1.0, march 2000, incorporated herein by reference.

The JPEG2000 has better image quality and better compression grade than JPEG at the expense of requiring additional computational complexity and time due to the use of a wavelet function instead of cosine functions.

In order to restore a JPEG or JPEG2000 compressed image the inverse DCT (IDCT) or the inverse DWT (IDWT) is used, respectively.

```
IDCT:
```

$$\hat{Y}_{m,n} = \frac{4}{N^2} \sum_{p=0}^{N-1} \sum_{q=0}^{N-1} \alpha_q \alpha_p U_{p,q} \cos \frac{\pi(2m+1)p}{2N} \cos \frac{\pi(2n+1)q}{2N};$$

Here $U_{p,q}$ is the compressed image information, i.e. transform coefficients of the N×N point DCT transform, $p$ and $q$ are indices of the transform coefficients $U_{p,q}$, $\alpha_q$ and $\alpha_p$ are constants determined by $U_{p,q}$, N is the size of the N×N DCT transform, $n$ the index/coordinate along one axis of the restored image, $m$ the index/coordinate along the other axis, and $Y_{m,n}$ the restored image. A Huffman coder may be applied on the transform coefficients to quantify and bit pack them in order to prepare them for transmission.

If the length is not equal to the height the inverse transform would have 4/(N*M) instead of 4/N^2 where N is the length and M is the height of the picture/image and one of the sums would go to M-1 instead of N-1.

```
IDWT:
```

$$y(p,q) = \sum_{p=0}^{N-1}\sum_{q=0}^{N-1} U_{DWT}(p,q)a^{-\frac{p}{2}}f\left(a^{-p}t - qT\right)$$

Here $U_{DWT}(p,q)$ is the compressed image information, i.e. the N×N DWT coefficients, $p$ and $q$ are indices of the DWT transform coefficients $U_{DWT}$, $a^{-p/2}$ is a constant determined by $U_{DWT}(p,q)$, N is the size of the N×N DWT transform, $f(...)$ a wavelet function, and $y(p,q)$ the restored image.

However, since that the JPEG standard has been popularly and widespread used many stored images and equipment use it as the algorithm of choice thereby making it difficult to use the pictures and equipment according to the JPEG2000 standard, especially for equipment which not normally easy upgradeable.

Another problem is that since most compressed images are stored in JPEG a device has at least in a transition period to be able to support both formats, which requires direct support of both formats thereby increasing the complexity, memory need, power consumption, etc.

The object of the invention is to provide a method with the possibility of supporting both the JPEG and JPEG2000 image compression standards or two or more image formats having at least some things in common with respect to decompression.

Another object is to provide a method with low complexity image decoding, which is especially useful in portable apparatuses typically having a relatively limited power supply and computational capability.

Yet another object is to provide a method with backward compatibility to earlier JPEG standard images.

These objects are achieved by a method of supporting a first and a second image format of the aforementioned kind, which further comprises the step of

- applying a base function to at least part of the obtained image using at least part of the derived relevant information, where the base function is a function common to both the first and the second image format.

Hereby, a method that supports at least two image formats are obtained while only having implemented one base function, which even may be optimized for this specific task. Since only a single base function needs to be implemented/used memory usage and thereby power consumption is reduced. Additionally, the base function may also be simpler than one of the normally used inverse functions/transforms for one of the image formats thereby reducing complexity, the needed amount of calculation (MIPS) and power usage even further. This is e.g. the case for one format being JPEG2000 and a suitable base function, since the use of IDWT is avoided.

In accordance with one embodiment of the method, the first format and/or second format is selected from the group of: JPEG and JPEG2000.

In accordance with another embodiment, the step of deriving relevant information comprises at least one of

- deriving at least one constant on the basis of the obtained image data, and
- deriving at least one table on the basis of the obtained image data.

Hereby, very only simple information needs to be derived as input for the base function.

In a preferred embodiment, the step of deriving relevant information comprises deriving information relating to the inverse transform according to the first and/or second format.

In a preferred embodiment

- the format of the image is JPEG being able to be decoded by the inverse discrete cosine transform (IDCT),
- the step of deriving relevant information comprises deriving at least one constant using the constant parts of the IDCT and the image data, and deriving a table using the cosine parts of the IDCT and the image data.

Hereby, an image in JPEG format may be decoded using the base function where the need for calculating the complete IDCT is avoided.

In another preferred embodiment

- the format of the image is JPEG2000 being able to be decoded by the inverse discrete wavelet transform (IDWT),
- the step of deriving relevant information comprises deriving at least one constant using the constant parts of the IDWT and the image data, and deriving a table using the wavelet function part(s) of the IDWT and the image data.

Hereby, an image in JPEG2000 format may be decoded using the base function where the need for calculating the complete IDWT is avoided.

In a preferred embodiment the base function is done by applying two sums one from index 0 to N-1 and one from index 0 to M-1 on the at least one derived constant, the derived table, and the image data, where N and M is equal to the length and the height of image, respectively.

Hereby, a very simple base function is obtained reducing complexity, memory and/or power consumption.

Another object of the invention is to provide a method, which advantageously converts between two compressed image formats in a simple manner.

This object is achieved by a method of converting between a first and a second image format of the aforementioned kind, where

the step of deriving relevant information comprises

- deriving at least one first constant according to the inverse transform of the first image format and using the image data, and
- deriving at least one first table according to the inverse transform of the first image format,

and the method further comprises the step of

- deriving at least one second constant according to the inverse transform of the second image format and using the at least one first constant,
- and deriving at least one second table according to the inverse transform of the second image format using the at least one first table.

In this way, it is not necessary to decode the image/image file in the first format completely into an uncompressed image and then code the uncompressed image into the second format, since an image in the second format is calculated directly from the image in the first format using the similarities in the format's respective inverse functions. This reduces the complexity of the system/method and avoids transcoding, which could degrade the image quality.

In a preferred embodiment,

- the first image format is JPEG and the second image format is JPEG2000, or
- the first image format is JPEG2000 and the second image format is JPEG.

In this way conversion from JPEG to JPEG2000 or conversion from JPEG2000 to JPEG are obtained.

In one embodiment, the method is used in a portable device.

In a preferred embodiment, the method is used in a mobile telephone.

Another object of the invention is to provide an apparatus that supports both the JPEG and JPEG2000 image compression standards in a very simple manner.

Another object is to provide an apparatus with low complexity image decoding, which is especially useful in portable apparatuses with typically a relatively limited power supply and computational capability.

Yet another object is to provide an apparatus with backward compatibility to earlier JPEG standard images.

These objects are achieved by an apparatus of the aforementioned kind, where the processing means further is adapted to

- apply a base function to at least part of the obtained image using at least part of the derived relevant information, where the base function is a function common to both the first and the second image format.

In one embodiment, the first format and/or second format is selected from the group of: JPEG and JPEG2000.

In one embodiment, the processing means is adapted to derive relevant information by

- deriving at least one constant on the basis of the obtained image data, and/or
- deriving at least one table on the basis of the obtained image data.

In one embodiment, the processing means is adapted to derive relevant information by deriving information relating to the inverse transform according to the first and/or second format.

In one embodiment,

- the format of the image is JPEG being able to be decoded by the inverse discrete cosine transform (IDCT), and
- the processing means is adapted to derive at least one constant using the constant parts of the IDCT and the image data, and deriving a table using the cosine parts of the IDCT and the image data.

In one embodiment,

- the format of the image is JPEG2000 being able to be decoded by the inverse discrete wavelet transform (IDWT), and
- the processing means is adapted to derive at least one constant using the constant parts of the IDWT and the image data, and deriving a table using the wavelet function part(s) of the IDWT and the image data.

In one embodiment, the base function is done by applying two sums one from index 0 to N-1 and one from index 0 to M-1 on the at least one derived constant, the derived table, and the image data, where N and M is equal to the length and the height of image, respectively.

The invention also relates to an apparatus for converting between a first and a second image format, the apparatus comprising

- receiving means for obtaining image data in the first image format from a compressed image, and
- processing means for deriving relevant information on the basis of the obtained image data,

where the processing means further is adapted to

- derive at least one first constant according to the inverse transform of the first image format and using the image data,
- derive at least one first table according to the inverse transform of the first image format,
- derive at least one second constant according to the inverse transform of the second image format and using the at least one first constant, and
- derive at least one second table according to the inverse transform of the second image format using the at least one first table.

In one embodiment,

- the first image format is JPEG and the second image format is JPEG2000, or
- the first image format is JPEG2000 and the second image format is JPEG.

The apparatus and embodiments thereof correspond to the random number generator and embodiments thereof and have the same advantages for the same reasons why they are not described again.

Further, the invention relates to a computer-readable medium having stored thereon instructions for causing a processing unit or a computer system to execute the method described above and in the following. A computer-readable medium may e.g. be a CD-ROM, a CD-R, a DVD RAM/ROM, a floppy disk, a hard disk, a smart card, a network accessible via a network connection, a ROM, RAM, and/or Flash memory, etc. or generally any other kind of media that provides a computer system with information regarding how instructions/commands should be executed.

Hereby, when a computer is caused to retrieve electronic information - as a consequence of the contents of a computer-readable medium as described above - the advantages mentioned in connection with the corresponding method according to the invention are achieved.

Finally, the invention relates to a computer system comprising means adapted to execute a program, where the program, when executed, causes the computer system to perform the method according to the invention thereby obtaining the above mentioned advantages and/or effects.

By computer system is meant e.g. a system comprising one or more processor means, like a specialised or general purpose CPU or the like, which may be programmed/instructed at one time or another in such a way that the computer executes the method according to the invention fully or in part.

The present invention will now be described more fully with reference to the drawings, in which

Figure 1a shows a flow chart of an embodiment of the method according to the present invention illustrating conversion from JPEG to JPEG2000 as an example;

Figure 1b shows a flow chart of another embodiment of the method according to the present invention illustrating conversion from JPEG2000 to JPEG as an example;

Figure 2 illustrates a preferred embodiment of the method according to the present invention;

Figure 3 illustrates a schematic block diagram of an apparatus according to an embodiment of the present invention;

Figure 4 shows a preferred embodiment of the invention, which may contain the apparatus and/or use the method according to the present invention;

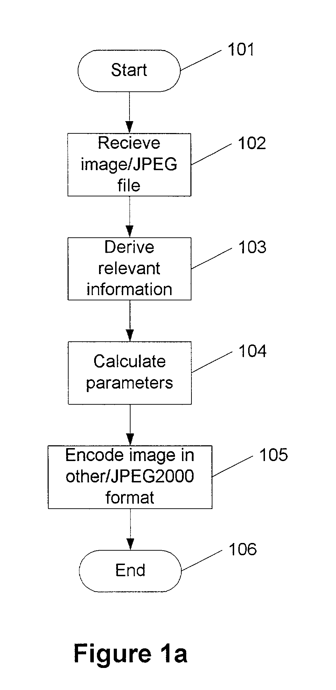

Figure 1a shows a flow chart of an embodiment of the method according to the present invention illustrating conversion from JPEG to JPEG2000 as an example. This figure illustrates using the present invention to convert an image/image file from one format to another.

The method starts at step (101).

At step (102) image data/a image file is obtained/received, where the image data/image file is in a first format that is to be converted into a second format. Preferably in this example, the image data/file is in a JPEG format.

The received image data/information is data, which may be described by a table/matrix $U_{p,q}$ of size $p \times q$, where each entry $(p,q)$ in the table/matrix comprises information relevant for re-generating/restoring the image/picture again using the appropriate inverse function, which for a JPEG image data file is:

$$\text{IDCT:}$$

$$\hat{Y}_{m,n} = \frac{4}{N^2} \sum_{p=0}^{N-1} \sum_{q=0}^{N-1} \alpha_q \alpha_p U_{p,q} \cos \frac{\pi(2m+1)p}{2N} \cos \frac{\pi(2n+1)q}{2N};$$

This inverse function may be used to decode/uncompress the image data/file directly e.g. for presentation on a display, further processing, transmission, etc.

At step (103) relevant information needed in order to restore the compressed image is derived from the received/obtained image file. The derived relevant information comprises, for this example, the constants $\alpha_q$ and $\alpha_p$ from the image data/file, i.e. $U_{p,q}$.

The arrangement, derivation and meaning of $U_{p,q}$, $\alpha_q$ and $\alpha_p$ are well known in the prior art regarding the JPEG format.

At step (104) parameters, relevant information etc. for the second format, i.e. the format that the image is being converted to, for the image file/data is calculated directly on the basis of the derived information and the received image data/file.

This calculation comprises for this particular example calculating a matrix/table *A*, where be corresponds to the cosine parts and the constant 4/N^2 of the inverse function for the first format/JPEG, that is:

$$A_{m,n} = \frac{4}{N^2} \cos \frac{\pi(2m+1)p}{2N} \cos \frac{\pi(2n+1)q}{2N};$$

This table/matrix may then be stored in a suitable way in suitable memory means.

For this particular example the second format is the JPEG2000 format where a JPEG2000 encoded image may normally be decompressed using the following inverse function:

$$\text{IDWT:}$$

$$y(p,q) = \sum_{p=0}^{N-1} \sum_{q=0}^{N-1} U_{DWT}(p,q) a^{-\frac{p}{2}} f\left(a^{-p}t - qT\right)$$

It may be seen that the IDWT and IDCT differs only in the constants and that cosine part are calculated instead of the wavelet function *f*.

So in order to convert the image data from JPEG to JPEG2000 when *A* already is calculated is to normalise/equalise the respective constants. That is setting $a^{-p/2} = \alpha_q \alpha_p$ and solving for *a* for each given *p* and *q*.

The resulting constant(s) may be stored in a suitable fashion in suitable memory means, like a suitable table in memory.

At step (105) a new image file/image data is then obtained by using *A* and the calculated constants thereby deriving the compressed picture data/file according to the second format or more specifically in this particular example thereby deriving the $U_{DWT}$, which defines an image according to the second format/JPEG2000.

More specifically, this may be done by using an intermediate parameter as:

$$B_{p,q} = a^{-\frac{p}{2}} f(a^{-p} t - qT);$$

where *f(...)* e.g. may be calculated by the Daubechies 5/3 analysis wavelet, as given in the reference JPEG2000 Image Coding Systems, ISO Final committee draft Version 1.0, march 2000, and $a^{-p/2}$ may be calculated as given above.

The method ends at step (106).

So in this way it is not necessary to decode the image file in the first format completely into an uncompressed image and then code the uncompressed image into the second format, since an image in the second format is calculated directly from the image in the first format using the similarities in the format's respective inverse functions. This reduces the complexity of the system/method and avoids transcoding, which could degrade the image quality.

Additionally, a device comprising the method/steps in Figure 1a may also receive a picture file in a first format/ JPEG and convert it to a second format/JPEG2000, and transmit it to another device, which only supports the second format. This is especially useful in a transition time period when images/pictures largely exists in one format, since only minimum changes/requirements is needed for support of both types.

Alternatively, step (103) and step (104) may be performed in a single step.

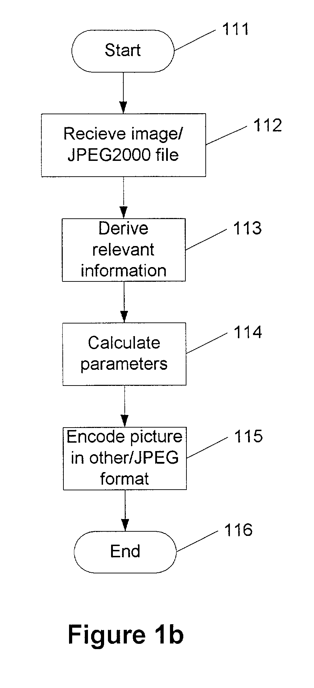

Figure 1b shows a flow chart of another embodiment of the method according to the present invention illustrating conversion from JPEG2000 to JPEG as an example. This example corresponds to the example explained in connection with Figure 1a but where the conversion is done the other way, i.e. from the second format/JPEG2000 to the first/JPEG in terms of Figure 1a. Generally, the first format and the second format relates to the format being converted from and the format being converted to, respectively.

The method starts at step (111).

At step (112) image data/a image file is obtained/received, where the image data/image file is in a first format that is to be converted into a second format. Preferably in this example, the image data/file is in a JPEG2000 format.

The received image data/information is data, which may be described by a table/matrix $U_{DWT}(p,q)$ of size $p \times q$, where each entry (*p,q*) in the table/matrix comprises information relevant for re-generating/restoring the image/ picture again using the appropriate inverse function, which for a JPEG2000 image data file is:

IDWT:

$$y(p,q) = \sum_{p=0}^{N-1} \sum_{q=0}^{N-1} U_{DWT}(p,q) a^{-\frac{p}{2}} f\left(a^{-p} t - qT\right)$$

This inverse function/transform is normally used to decode/uncompress the image data/file directly e.g. for presentation on a display, further processing, transmission, etc.

At step (113) relevant information needed in order to restore the compressed image is derived from the received/obtained image file. The derived relevant information comprises, for this example, the constants $a^{-p/2}$ from the image data/file, i.e. $U_{DWT}(p,q)$.

The arrangement, derivation and meaning of $U_{DWT}(p,q)$ and $a^{-p/2}$ are well known in the prior art regarding the JPEG2000 format.

At step (114) parameters, relevant information etc. for the second format, i.e. the format that the image is being converted to, for the image file/data is calculated directly on the basis of the derived information and the received image data/file.

This calculation comprises for this particular example calculating a matrix/table *A\**, which corresponds to the wavelet function of the inverse function for the first format/JPEG2000, that is:

$$A*_{p,q} = f\!\left(a^{-P}t - qT\right).$$

This table/matrix may then be stored in a suitable way in suitable memory means.

For this particular example the second format is the JPEG format where a JPEG encoded image may normally be decompressed using the following inverse function:

IDCT:

$$\hat{Y}_{m,n} = \frac{4}{N^2}\sum_{p=0}^{N-1}\sum_{q=0}^{N-1}\alpha_q\alpha_p U_{p,q}\cos\frac{\pi(2m+1)p}{2N}\cos\frac{\pi(2n+1)q}{2N};$$

It may be seen that the IDCT and IDWT differs only in the constants and that cosine part are calculated instead of the wavelet function $f$.

So in order to convert the image data from JPEG2000 to JPEG when $A*$ already is calculated is to normalise/equalise the respective constants. That is setting $\alpha_q\alpha_p = a^{-p/2}$ and solving for $\alpha_q\alpha_p$ for each given $p$ and $q$.

The resulting constant(s) may be stored in a suitable fashion in suitable memory means.

At step (115) a new image file/image data is then obtained by using $A*$ and the calculated constants thereby deriving the compressed picture data/file according to the second format or more specifically in this particular example thereby deriving the $U_{p,q}$, which defines an image according to the second format/JPEG.

In this way it is not necessary to decode the image file in the first format completely into an uncompressed image and then code the uncompressed image into the second format, since an image in the second format is calculated directly from the image in the first format using the similarities in the format's respective inverse functions. This reduces the complexity of the system/method and avoids transcoding, which could degrade the image quality.

Additionally, a device comprising the method/steps in Figure 1b may also receive a picture file in a first format/JPEG2000 and convert it to a second format/JPEG, and transmit it to another device, which only supports the second format. This is especially useful in a transition time period when images/pictures largely exists in and equipment uses one format, since only minimum changes/requirements is needed for support of both types.

The method ends at step (116).

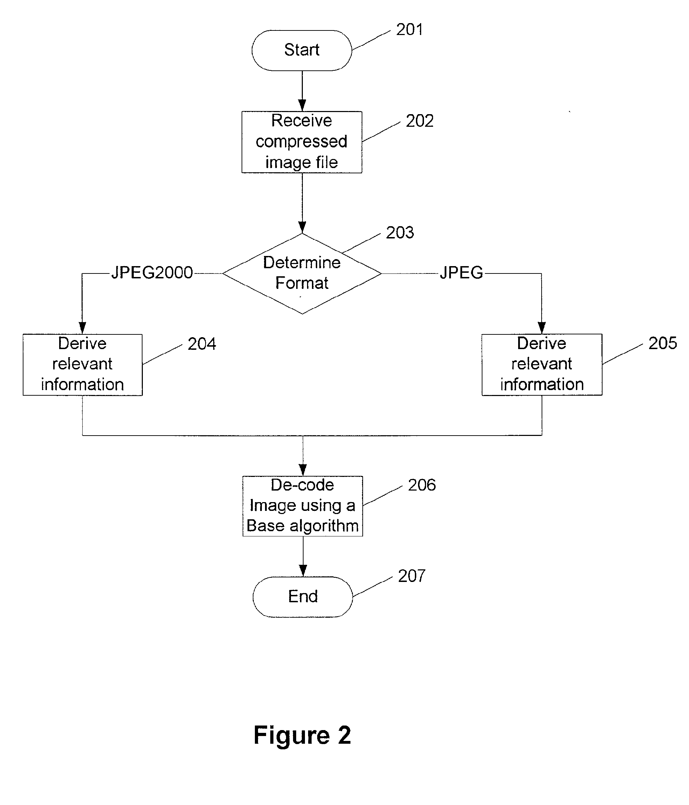

Figure 2 illustrates a preferred embodiment of the method according to the present invention. Shown is a flow chart illustrating a method that support two different image formats having some similarities.

The method starts at step (201).

At step (202) image data/a image file is obtained/received, where the image data/image file is in a first format or a second format that is to be decoded/de-compressed. Preferably in this example, the image data/file is in JPEG or JPEG2000 format.

For an image file of the JPEG format the image file will directly contain $U_{p,q}$, describing the image in compressed JPEG format, wherefrom the constants $\alpha_q$ and $\alpha_p$ may be calculated/derived as known from prior art. $U_{p,q}$, $\alpha_q$ and $\alpha_p$ may normally be used by the IDCT in order to retrieve an uncompressed version of the image.

For an image file of the JPEG2000 format the image file will directly contain $U_{DWT}(p,q)$, describing the image in compressed format, wherefrom the constants $a^{-p/2}$ may be calculated/derived as known from prior art. $U_{DWT}(p,q)$ and $a^{-p/2}$ (together with a relevant wavelet function $f$) may normally be used by IDWT in order to de-compress/decode the image.

At step (203) a test/determination is made of which format the received/obtained image is in. This test/determination may be performed quite simply, e.g. by looking at a given section in a header of the image file/data.

Dependent of which format the image is in the method proceeds in one of two ways. As an example used to illustrate the method a first format being JPEG2000 and a second format being JPEG are used.

If the test/determination determines that the format of the received image data/file is JPEG2000 then the method proceeds to step (204). If the format of the received image data/file is JPEG the method proceeds to step (205).

At step (204) relevant information relating, in this example, to the JPEG2000 format is determined/obtained. The relevant information is the constants $a^{-p/2}$, which is directly obtainable according to standard prior art from the image file/image data, i.e. $U_{DWT}(p,q)$, and the following table (like described in connection with Figure 1b)

$$A *_{p,q} = f\left(a^{-p}t - qT\right)$$

The relevant constants may be stored in a table, row of a table, vector, one-dimensional array, etc. and the above table may be stored in a table, two-dimensional array, a matrix structure, etc. for later retrieval and use.

At step (205) relevant information relating, in this example, to the JPEG format is determined/obtained. The relevant information is the constants $\alpha_q\alpha_p$, which is directly obtainable from the image file/image data, i.e. $U_{p,q}$, and the following table (like described in connection with Figure 1a)

$$A_{m,n} = \frac{4}{N^2} \cos\frac{\pi(2\,m + 1)p}{2\,N}\cos\frac{\pi(2\,n + 1)q}{2\,N};$$

The relevant constants may be stored in a table, row of a table, vector, one-dimensional array, etc. and the above table may be stored in a table, two-dimensional array, a matrix structure, etc. for later retrieval and use.

The obtained constants $\alpha_q\alpha_p$ may be multiplied with the constant 4/N^2 prior to storage instead of multiplying with 4/N^2 in the expression for $A$.

At step (206) the image is de-coded/de-compressed using a "base" algorithm/method being similar to the two formats. The base algorithm/method uses a table (either A or A*) and a row/table of constants (either $a^{-p/2}$ or $\alpha_q\,\alpha_p$) as input. For support of both the JPEG and JPEG2000 format the base algorithm/method would be according to:

$$Picture(p,q) = \sum_{p=0}^{N-1}\sum_{q=0}^{N-1} U(p,q) \cdot K(p,q) \cdot Table(p,q),$$

for a picture having equal length and height (otherwise one of the sums would go from 0 to M-1 where M is the size of either the length or height and N is the size of either the height or length).

In this expression for the base algorithm/method *Picture* is the de-coded picture being of size $p\times q$, $U(p,q)$ is the compressed picture information (obtained from the image data/image file), $K(p,q)$ is the constants (e.g. being dependent on p and/or q or even none) derived from the compressed picture information, and *Table(p,q)* is the table calculated as explained above.

For a compressed image file/compressed image data in JPEG format these would be:

$$U(p,q) \qquad U_{p,q}$$

$$K(p,q) \qquad 4/N^2\ \alpha_q\alpha_p$$

$$Table\ (p,q) \qquad \cos\frac{\pi(2m+1)p}{2N}\cos\frac{\pi(2n+1)q}{2N}$$

Alternatively, the constant factor 4/N^2 may be multiplied to the expression for the *Table(p,q)* or kept as a separate additional constant.

For a compressed image file/compressed image data in JPEG2000 format these would be:

$$U(p,q) \qquad U_{DWT}(p,q)$$

$$K(p,q) \qquad a^{-p/2}$$

$$Table(p,q) \qquad f\!\left(a^{-p}t - qT\right)$$

In this way, a single method may support two different compressed image formats having certain similarities like the JPEG and JPEG2000 without having to implement separate individual support for each format, i.e. it is not necessary to have specific JPEG decoder and a JPEG2000 decoder functionality.

Additionally, low complexity image decoding is obtained.

Since only a single transform needs to be implemented a low power consumption is achieved, which is especially important for portable devices/apparatuses like a mobile phone, etc., since the single transform needs less memory and requires less processor instructions (MIPS).

Additionally, backward compatibility to earlier JPEG standard is obtained while maintaining compatibility with the newer JPEG2000 standard. This is done is a very simple way.

Alternatively, more than two formats may be supported as long as the formats have some similarities/common calculations between their individual inverse functions.

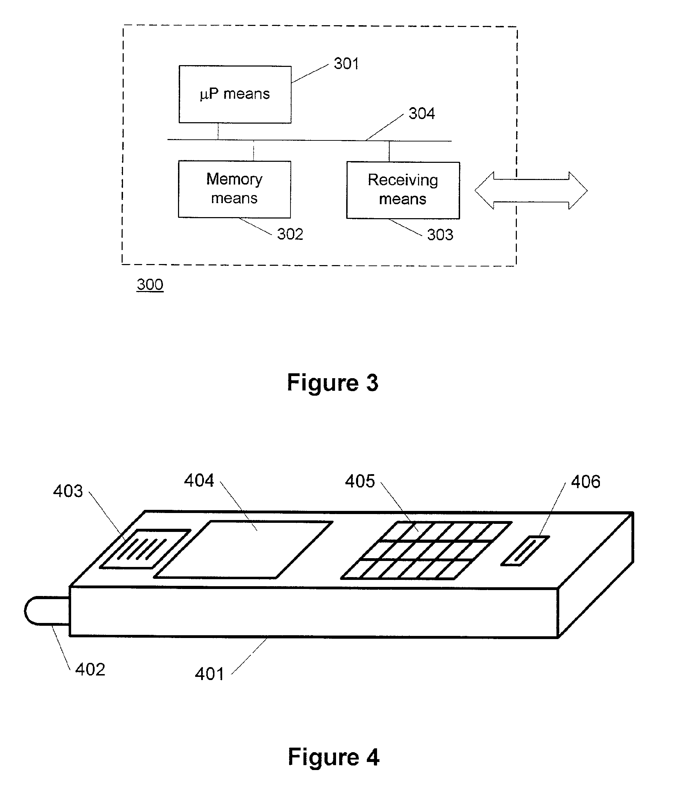

Figure 3 illustrates a schematic block diagram of an apparatus according to an embodiment of the present invention. Shown is an apparatus (300) comprising microprocessor means (301), memory means (302), receiving means (303) and connection means (304) like a bus or the like.

The receiving means (303) is adapted to receive image data/an image file, where the image data/image file is in a first format or a second format that is to be decoded/de-compressed and/or converted. Preferably, the image data/file is in JPEG or JPEG2000 format.

For an image file of the JPEG format the image file will directly contain $U_{p,q}$, describing the image in compressed JPEG format, wherefrom the constants $\alpha_q$ and $\alpha_p$ may be calculated/derived as known from prior art. $U_{p,q}$, $\alpha_q$ and $\alpha_p$ may normally be used by the IDCT in order to retrieve an uncompressed version of the image.

For an image file of the JPEG2000 format the image file will directly contain $U_{DWT}(p,q)$, describing the image in compressed format, wherefrom the constants $a^{-p/2}$ may be calculated/derived as known from prior art. $U_{DWT}(p,q)$ and $a^{-p/2}$ (together with a relevant wavelet function $f$) may normally be used by IDWT in order to de-compress/decode the image.

The received information is stored in the memory means (302) via the bus (304) for processing by the microprocessor means (301).

Dependent of which format the image is in the microprocessor means (301) may process the information in a similar way but with different processing steps in order to derive relevant information, parameters, etc. form the received image file/image data. As an example used to illustrate apparatus formats being JPEG2000 and JPEG are used.

If the received image data is in JPEG2000 format the relevant information is the constants $a^{-p/2}$, which is directly obtainable according to standard prior art from the image file/image data, i.e. $U_{DWT}(p,q)$, and the following table (like described in connection with Figure 1b)

$$A*_{p.q} = f\!\left(a^{-p}t - qT\right)$$

The relevant constants may be stored in a table, row of a table, vector, one-dimensional array, etc. and the above table may be stored in a table, two-dimensional array, a matrix structure, etc. in the memory means (302) for later retrieval, further processing and use.

If the received image data is in JPEG format the relevant information is the constants $\alpha_q\alpha_p$, which is directly obtainable from the image file/image data, i.e. $U_{p,q}$, and the following table (like described in connection with Figure 1a)

$$A_{m,n} = \frac{4}{N^2} \cos \frac{\pi(2\,m + 1)p}{2\,N} \cos \frac{\pi(2\,n + 1)q}{2\,N};$$

The relevant constants may be stored in a table, row of a table, vector, one-dimensional array, etc. and the above table may be stored in a table, two-dimensional array, a matrix structure, etc. in the memory means (302) for later retrieval, processing and use.

The obtained constants $\alpha_q\alpha_p$ may be multiplied with the constant 4/N^2 prior to storage instead of multiplying with 4/N^2 in the expression for $A$.

The stored information, i.e. the constant(s) and the table is de-coded/de-compressed using the microprocessor means (301) by using a "base" algorithm/method being similar to the two formats. The base algorithm/method uses a table (either A or A*) and a row/table of constants (either $a^{-p/2}$ or $\alpha_q\,\alpha_p$) as input. For support of both the JPEG and JPEG2000 format the base algorithm/method would be according to:

$$Picture(p,q) = \sum_{p=0}^{N-1}\sum_{q=0}^{N-1} U(p,q) \cdot K(p,q) \cdot Table(p,q),$$

for a image/picture having equal length and height (otherwise one of the sums would go from 0 to M-1 where M is the size of either the length or height and N is the size of either the height or length).

In this expression for the base algorithm/method *Picture* is the de-coded picture being of size $p \times q$, $U(p,q)$ is the compressed picture information (obtained from the image data/image file), $K(p,q)$ is the constants (e.g. being dependent on p and/or q or even none) derived from the compressed picture information, and *Table(p,q)* is the table calculated as explained above.

For a compressed image file/compressed image data in JPEG format these would be:

$$U(p,q) \qquad U_{p,q}$$

$$K(p,q) \qquad 4/N^2\ \alpha_q\alpha_p$$

$$Table\ (p,\ q) \qquad \cos\frac{\pi(2m+1)p}{2N}\cos\frac{\pi(2n+1)q}{2N}$$

Alternatively, the constant factor 4/N^2 may be multiplied to the expression for the *Table(p,q)* or kept as a separate additional constant.

For a compressed image file/compressed image data in JPEG2000 format these would be:

$$U(p,q) \qquad U_{DWT}(p,q)$$

$$K(p,q) \qquad a^{-p/2}$$

$$Table(p,q) \qquad f\!\left(a^{-p}t - qT\right)$$

In this way, a single transform implemented in the apparatus (300) may support two different compressed image formats having certain similarities like the JPEG and JPEG2000 without having to implement separate individual support for each format, i.e. it is not necessary to have specific JPEG decoder and a JPEG2000 decoder functionality.

Additionally, low complexity image decoding is obtained.

Since only a single transform needs to be implemented a low power consumption is achieved, which is especially important for portable devices/apparatuses like a mobile phone, etc., since the single transform needs less memory and requires less processor instructions (MIPS).

Additionally, backward compatibility to earlier JPEG standard is obtained while maintaining compatibility with the newer JPEG2000 standard. This is done is a very simple way.

Alternatively, more than two formats may be supported as long as the formats have some similarities/common calculations between their individual inverse functions.

Figure 4 shows a preferred embodiment of the invention, which may contain the apparatus and/or use the method according to the present invention. Shown is a mobile telephone (401) having display means (404), input means (405) like a keypad, touch screen, etc., an antenna (402), a microphone (406), and a speaker (403). By including the apparatus and/or use the method according to the present invention, simple support of two different compressed image formats having certain similarities like the JPEG and JPEG2000 without having to implement separate individual support for each format. Additionally, low complexity image decoding is obtained and since only a single transform needs to be implemented a low power consumption is achieved since the single transform needs less memory and requires less processor instructions (MIPS).

Additionally, backward compatibility to earlier JPEG standard is obtained while maintaining compatibility with the newer JPEG2000 standard. This is done is a very simple way.

**Claims**

1. A method of supporting a first and a second image format, the method comprising the steps of

   - obtaining image data in the first image format or in the second image format from a compressed image, and
   - deriving relevant information on the basis of the obtained image data,

   **characterized in that** the method further comprises the step of

   - applying a base function to at least part of the obtained image using at least part of the derived relevant information, where the base function is a function common to both the first and the second image format.

2. Method according to claim 1, **characterized in that** the first format and/or second format is selected from the group of: JPEG and JPEG2000.

3. Method according to claim 1 or 2, **characterized in that** the step of deriving relevant information comprises at least one of

   - deriving at least one constant on the basis of the obtained image data, and
   - deriving at least one table on the basis of the obtained image data.

4. Method according to any one of claims 1 - 3, **characterized in that** the step of deriving relevant information comprises deriving information relating to the inverse transform according to the first and/or second format.

5. Method according to any one of claims 3 - 4, **characterized in that**

   - the format of the image is JPEG being able to be decoded by the inverse discrete cosine transform (IDCT),
   - the step of deriving relevant information comprises deriving at least one constant using the constant parts of the IDCT and the image data, and deriving a table using the cosine parts of the IDCT and the image data.

6. Method according to any one of claims 3 - 5, **characterized in that**

   - the format of the image is JPEG2000 being able to be decoded by the inverse discrete wavelet transform (IDWT),
   - the step of deriving relevant information comprises deriving at least one constant using the constant parts of the IDWT and the image data, and deriving a table using the wavelet function part(s) of the IDWT and the image data.

7. Method according to any one of claims 1 - 6, **characterized in that** the base function is done by applying two sums one from index 0 to N-1 and one from index 0 to M-1 on the at least one derived constant, the derived table, and the image data, where N and M is equal to the length and the height of image, respectively.

8. A method of converting between a first and a second image format, the method comprising the steps of

   - obtaining image data in the first image format from a compressed image, and
   - deriving relevant information on the basis of the obtained image data,

   **characterized in that** the step of deriving relevant information comprises

   - deriving at least one first constant according to the inverse transform of the first image format and using the image data, and

- deriving at least one first table according to the inverse transform of the first image format,

and **in that** the method further comprises the step of

- deriving at least one second constant according to the inverse transform of the second image format and using the at least one first constant,
- and deriving at least one second table according to the inverse transform of the second image format using the at least one first table.

9. Method according to claim 8, **characterized in that**

- the first image format is JPEG and the second image format is JPEG2000, or
- the first image format is JPEG2000 and the second image format is JPEG.

10. A method according to any one of the claims 1 - 9, **characterized in that** said method is used in a portable device.

11. A method according to any one of the claims 1 - 10, **characterized in that** said method is used in a mobile telephone.

12. A computer-readable medium having stored thereon instructions for causing a processing unit to execute the method according to any one of claims 1 - 11.

13. A computer system comprising means adapted to execute a program, where the program, when executed, causes the computer system to perform the method according to claims 1 - 11.

14. An apparatus for supporting a first and a second image format, the apparatus comprising

- receiving means (303) for receiving image data in the first image format or in the second image format from a compressed image, and
- processing means (301) for deriving relevant information on the basis of the obtained image data,

**characterized in that** the processing means (301) further is adapted to

- apply a base function to at least part of the obtained image using at least part of the derived relevant information, where the base function is a function common to both the first and the second image format.

15. Apparatus according to claim 14, **characterized in that** the first format and/or second format is selected from the group of: JPEG and JPEG2000.

16. Apparatus according to claim 14 or 15, **characterized in that** processing means (301) is adapted to derive relevant information by

- deriving at least one constant on the basis of the obtained image data, and/or
- deriving at least one table on the basis of the obtained image data.

17. Apparatus according to any one of claims 14 - 16, **characterized in that** processing means (301) is adapted to derive relevant information by deriving information relating to the inverse transform according to the first and/or second format.

18. Apparatus according to any one of claims 16 - 17, **characterized in that**

- the format of the image is JPEG being able to be decoded by the inverse discrete cosine transform (IDCT),
- that processing means (301) is adapted to derive at least one constant using the constant parts of the IDCT and the image data, and deriving a table using the cosine parts of the IDCT and the image data.

19. Apparatus according to any one of claims 16 - 18, **characterized in that**

- the format of the image is JPEG2000 being able to be decoded by the inverse discrete wavelet transform (IDWT),

- that processing means (301) is adapted to derive at least one constant using the constant parts of the IDWT and the image data, and deriving a table using the wavelet function part(s) of the IDWT and the image data.

**20.** Apparatus according to any one of claims 14 - 19, **characterized in that** the base function is done by applying two sums one from index 0 to N-1 and one from index 0 to M-1 on the at least one derived constant, the derived table, and the image data, where N and M is equal to the length and the height of image, respectively.

**21.** An apparatus for converting between a first and a second image format, the apparatus comprises

- receiving means (303) for obtaining image data in the first image format from a compressed image, and
- processing means (301) for deriving relevant information on the basis of the obtained image data,

**characterized in that** the processing means (301) further is adapted to

- derive at least one first constant according to the inverse transform of the first image format and using the image data,
- derive at least one first table according to the inverse transform of the first image format,
- derive at least one second constant according to the inverse transform of the second image format and using the at least one first constant, and
- derive at least one second table according to the inverse transform of the second image format using the at least one first table.

**22.** Apparatus according to claim 21, **characterized in that**

- the first image format is JPEG and the second image format is JPEG2000, or
- the first image format is JPEG2000 and the second image format is JPEG.

**Figure 1a**

Start — 111

Recieve image/
JPEG2000 file — 112

Derive
relevant
information — 113

Calculate
parameters — 114

Encode picture
in other/JPEG
format — 115

End — 116

## Figure 1b

Start — 201

Receive
compressed
image file — 202

Determine
Format — 203

JPEG2000 ———— | ———— JPEG

Derive
relevant
information — 204

Derive
relevant
information — 205

De-code
Image using a
Base algorithm — 206

End — 207

# Figure 2

**Figure 3**

**Figure 4**

**European Patent Office**

**EUROPEAN SEARCH REPORT**

Application Number

EP 01 61 0038

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 674 442 A (DISCOVISION ASS) 27 September 1995 (1995-09-27) | 1-5,7, 12-18,20 | G06T9/00 H04N7/26 |
| Y | * page 2, first paragraph * * page 54, lines 52-55 * | 6,10,11, 19 | |
| X | PO-CHIN HU ET AL: "A wavelet to DCT progressive image transcoder" PROCEEDINGS OF 7TH IEEE INTERNATIONAL CONFERENCE ON IMAGE PROCESSING, VANCOUVER, BC, CANADA, 10-13 SEPT. 2000, pages 968-971 vol.1, XP002182169 2000, Piscataway, NJ, USA, IEEE, USA ISBN: 0-7803-6297-7 * abstract * | 8-13,21, 22 | |
| X | CHONG U ET AL: "WAVELET TRANSCODING OF BLOCK DCT-BASED IMAGES THROUGH BLOCK TRANSFORM DOMAIN PROCESSING" PROCEEDINGS OF THE SPIE, SPIE, BELLINGHAM, VA, US, vol. 2825 part 2, 1996, pages 901-908, XP001025778 * abstract * | 8-13,21, 22 | TECHNICAL FIELDS SEARCHED (Int.Cl.7) G06T H04N |
| Y | "JPEG2000 requirements and profiles version 6.3" ISO/IEC JTC1/SC29/WG1 N1803, July 2000 (2000-07), pages 1-41, XP002177509 * page 4, line 35 - line 36 * | 6,19 | |

−/−−

The present search report has been drawn up for all claims

| Place of search | Date of completion of the search | Examiner |
|---|---|---|
| BERLIN | 7 November 2001 | Bouchaâla, N |

EPO FORM 1503 03.82 (P04C01)

European Patent
Office

Application Number

EP 01 61 0038

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**European Patent Office**

## EUROPEAN SEARCH REPORT

Application Number

EP 01 61 0038

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | BOLCIONI L ET AL: "A LOW-POWER, VOICE-CONTROLLED, H.263 VIDEO DECODER FOR PORTABLE APPLICATIONS" IEEE JOURNAL OF SOLID-STATE CIRCUITS, IEEE INC. NEW YORK, US, vol. 33, no. 11, November 1998 (1998-11), pages 1810-1818, XP000875475 ISSN: 0018-9200 * abstract * | 10,11 | |
| A | MARCELLIN M W ET AL: "AN OVERVIEW OF JPEG-2000" DATA COMPRESSION CONFERENCE, IEEE COMPUTER SOCIETY PRESS, LOS ALAMITOS, CA, US, 2000, pages 523-541, XP000914212 | | |
| A | ADAMS M D ET AL: "JasPer: a software-based JPEG-2000 codec implementation" PROCEEDINGS OF 7TH IEEE INTERNATIONAL CONFERENCE ON IMAGE PROCESSING, VANCOUVER, BC, CANADA, 10-13 SEPT. 2000, pages 53-56 vol.2, XP002177510 2000, Piscataway, NJ, USA, IEEE, USA ISBN: 0-7803-6297-7 | | TECHNICAL FIELDS SEARCHED (Int.Cl.7) |

The present search report has been drawn up for all claims

| Place of search | Date of completion of the search | Examiner |
|---|---|---|
| BERLIN | 7 November 2001 | Bouchaâla, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**LACK OF UNITY OF INVENTION SHEET B**

Application Number

EP 01 61 0038

The Search Division considers that the present European patent application does not comply with the requirements of unity of invention and relates to several inventions or groups of inventions, namely:

1. Claims: 1-7, 10 and 11 as dependent on 1,
   12 as having instructions to execute 1,
   13 as having means implementing 1, 14-20

   decoder supporting both JPEG and JPEG 2000 coding formats and applying in decoding a function common to both formats

2. Claims: 8 and 9, 10 and 11 as dependent on 8,
   12 as having instructions to execute 8,
   13 as having means implementing 8, 21, 22

   conversion of an image in a first coding format to a second image coding format, by deriving transform coefficients of second format from transform coefficients of first format

**ANNEX TO THE EUROPEAN SEARCH REPORT
ON EUROPEAN PATENT APPLICATION NO.**

EP 01 61 0038

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2001

| Patent document cited in search report | | Publication date | Patent family member(s) | | Publication date |
|---|---|---|---|---|---|
| EP 0674442 | A | 27-09-1995 | AT | 199200 T | 15-02-2001 |
| | | | AT | 203868 T | 15-08-2001 |
| | | | AT | 201123 T | 15-05-2001 |
| | | | AT | 201124 T | 15-05-2001 |
| | | | AT | 201125 T | 15-05-2001 |
| | | | CA | 2145156 A1 | 25-09-1995 |
| | | | CA | 2145157 A1 | 25-09-1995 |
| | | | CA | 2145158 A1 | 25-09-1995 |
| | | | CA | 2145159 A1 | 25-09-1995 |
| | | | CA | 2145218 A1 | 25-09-1995 |
| | | | CA | 2145219 A1 | 25-09-1995 |
| | | | CA | 2145220 A1 | 25-09-1995 |
| | | | CA | 2145221 A1 | 25-09-1995 |
| | | | CA | 2145222 A1 | 25-09-1995 |
| | | | CA | 2145223 A1 | 25-09-1995 |
| | | | CA | 2145224 A1 | 25-09-1995 |
| | | | CA | 2145225 A1 | 25-09-1995 |
| | | | CA | 2145361 A1 | 25-09-1995 |
| | | | CA | 2145362 A1 | 25-09-1995 |
| | | | CA | 2145363 A1 | 25-09-1995 |
| | | | CA | 2145365 A1 | 25-09-1995 |
| | | | CA | 2145379 A1 | 25-09-1995 |
| | | | CA | 2145423 A1 | 25-09-1995 |
| | | | CA | 2145424 A1 | 25-09-1995 |
| | | | CA | 2145425 A1 | 25-09-1995 |
| | | | CA | 2145426 A1 | 25-09-1995 |
| | | | CA | 2145427 A1 | 25-09-1995 |
| | | | CA | 2145549 A1 | 25-09-1995 |
| | | | CA | 2244810 A1 | 25-09-1995 |
| | | | CN | 1114489 A | 03-01-1996 |
| | | | CN | 1133534 A | 16-10-1996 |
| | | | CN | 1137212 A | 04-12-1996 |
| | | | CN | 1118475 A | 13-03-1996 |
| | | | CN | 1235483 A | 17-11-1999 |
| | | | DE | 69520076 D1 | 22-03-2001 |
| | | | DE | 69520076 T2 | 21-06-2001 |
| | | | DE | 69520852 D1 | 13-06-2001 |
| | | | DE | 69520852 T2 | 18-10-2001 |
| | | | DE | 69520893 D1 | 13-06-2001 |
| | | | DE | 69520893 T2 | 13-09-2001 |
| | | | DE | 69520894 D1 | 13-06-2001 |
| | | | DE | 69520894 T2 | 13-09-2001 |
| | | | DE | 69521927 D1 | 06-09-2001 |
| | | | EP | 1026600 A2 | 09-08-2000 |
| | | | EP | 0674266 A2 | 27-09-1995 |
| | | | EP | 0674442 A2 | 27-09-1995 |

EPO FORM P0459

For more details about this annex : see Official Journal of the European Patent Office, No. 12/82

EP 1 246 130 A1

**ANNEX TO THE EUROPEAN SEARCH REPORT
ON EUROPEAN PATENT APPLICATION NO.**   EP 01 61 0038

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2001

| Patent document cited in search report | Publication date | Patent family member(s) | Publication date |
|---|---|---|---|
| EP 0674442 A | | EP 0674446 A2 | 27-09-1995 |
| | | EP 0674443 A2 | 27-09-1995 |
| | | EP 0895422 A2 | 03-02-1999 |
| | | EP 0895166 A2 | 03-02-1999 |